Europäisches Patentamt

(19) European Patent Office

Office européen des brevets

(11) Publication number: **0 196 006**
**B1**

(12) **EUROPEAN PATENT SPECIFICATION**

(45) Date of publication of patent specification: **27.12.90**

(21) Application number: **86103703.4**

(22) Date of filing: **19.03.86**

(51) Int. Cl.⁵: **G 03 G 15/32**

(54) **Image sensor apparatus.**

(30) Priority: **19.03.85 JP 53412/85**

(43) Date of publication of application:
**01.10.86 Bulletin 86/40**

(45) Publication of the grant of the patent:
**27.12.90 Bulletin 90/52**

(84) Designated Contracting States:
**DE FR GB**

(56) References cited:
**DE-A-3 145 952**
**DE-A-3 211 380**
**FR-A-2 273 425**
**US-A-4 357 625**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Matsui, Hideki c/o Patent Division**
**KABUSHIKI KAISHA TOSHIBA 1-1 Shibaura**
**1-chome**
**Minato-ku Tokyo 105 (JP)**

(74) Representative: **Henkel, Feiler, Hänzel & Partner**
**Möhlstrasse 37**
**D-8000 München 80 (DE)**

Courier Press, Leamington Spa, England.

**Description**

This invention relates to a close contact type image sensor apparatus and, more particularly, to improvements in an optical system of the close contact type image sensor apparatus for transmitting an image from a document or the like to a sensor array.

Recently, image sensors of close contact type which serve as apparatus assembled in scanning type copying machine, facsimile apparatus, etc. for reading out image, have been attracting attentions. Such an image sensor comprises a photosensor array, which has a length substantially equal to the width of a document to be read out, and a rod lens array which is disposed between the photosensor array and document and comprising a number of rod lenses. The image of the document is focused on the same scale on the photosensor array by the rod lens array, whereby patterns or characters provided on the document are read out.

An image reading apparatus which uses such a close contact type image sensor, has a merit of reducing the optical path of the optical system to permit size reduction of the apparatus. In addition, it is possible to construct an image reading apparatus, in which photosensor array, optical system and illumination light source are provided in an integral relation to one another. Further, in a system, in which the document is held stationary and the close contact type image sensor is moved for reading the image, it is possible to move the entire module, so that the optical system includes less movable parts, which is advantageous from the standpoint of the maintenance.

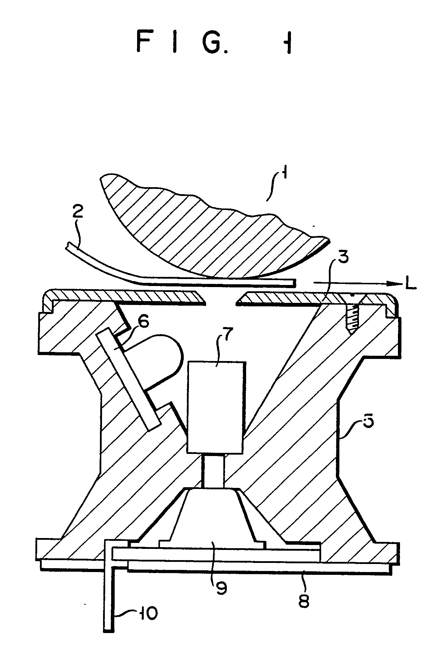

Now, a prior art example of the image reading apparatus will be described with reference to Fig. 1.

In the apparatus shown in Fig. 1, document 2 is fed out by platen roller 1 in secondary scanning direction L along the top of paper guide 3. The image provided on original sheet 2 is illuminated by light from light emitting unit 6 secured to support 5. The image of original 2, which is illuminated, is focused on a CCD line sensor of reading unit 9 through a rod lens array 7 secured to support 5. Reading unit 9 secured to support 5 by back lid 8. The image focused on the line sensor is converted into an electric signal which is provided from output terminal 10.

Where rod lens array 7 is used, a large distance has to be provided between document 2 and photosensor, i.e., line sensor, in order to provide a large focal point depth. To increase the distance, however, increases the size of the image reading apparatus, which is undesired from the standpoint of a trend for reducing the size. To avoid this drawback, an optical fiber may be used for rod lens array 7. In this case, however, the light collection efficiency is inferior, and the light intensity on the line sensor surface is reduced.

There is also known from DE—A—32 11 380 an image sensor apparatus for reading an image of an object to be read out comprising means for emitting light rays, means for transferring an image, which has a laminated structure in which a plurality of optical plate segments are accumulated, each of said plate segments including a light incident surface and a light emergence surface, light rays from said light emitting means being incident on the incident surface, passing through each of said plate segments and being emerged from the emergence surface which faces to the object to be read out, and the light rays reflected from said object being introduced into each of said plate segments through the emergence surface, adjacent ones of the optical plate segments are coupled by an adhesive layer, and means for sensing an image, said sensing means including a plurality of photosensor elements to which the light rays introduced into the corresponding plurality of optical plate segments are directed, the photosensor element converting the directed light rays into photoelectric signals.

Each plate segment receives light rays reflected from a linear area of the object to be read out and transfers the rays to the corresponding photosensor element. To this end the rays reflected from a one-pixel area of the object are guided via the plate segment provided for this area, and thus are efficiently applied to the corresponding photosensor element. However, not all rays of the light reflected from the one-pixel area pass through the corresponding plate segment. Rather some of these rays i.e. "spurious rays" do not pass through said plate segment, but through any of the other plate segments. Thus, they are incident on photosensor elements other than that element provided for the said one-pixel area. The said other photosensor elements convert said spurious rays into noise. Another problem existing in the known apparatus is that sometimes the image transfer optical unit may contact the object to be read out. When this occurs the respective surface of each plate segment is likely to be scratched. If scratched, the said surface disperses rays in all directions, inevitably decreasing the light-transfer efficiency of the optical unit.

The said disadvantages or problems existing in the known apparatus are overcome according to the present invention by means that the said adhesive layer is made of a material capable of attenuating the intensity level of light rays transmitted through it, and that the light emergence surfaces of the optical plate segments are coated with a wear-resistant film.

This invention can be more fully understood from the following detailed description when taken in conjunction with the accompanying drawings, in which:

Fig. 1 is a sectional view showing a prior art image sensor apparatus incorporating rod lenses;

Fig. 2 is a fragmentary perspective view showing an embodiment of the image sensor apparatus according to the invention;

Fig. 3 is a perspective view showing the arrangement of an optical system in the apparatus shown in Fig. 1;

Fig. 4 is a sectional view taken along line IV-IV in Fig. 3;

Figs. 5 and 6 are sectional views taken along line V-V showing a plate segment shown in Fig. 3; and

Fig. 7 is a fragmentary perspective view showing a different embodiment of the image sensor apparatus according to the invention.

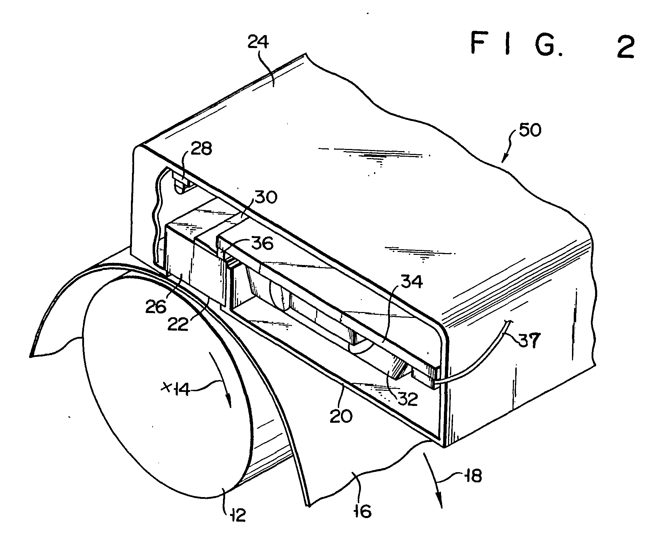

Fig. 2 shows an image sensor apparatus embodying the invention. Platen roller 12 is disposed beneath housing 24. With rotation of platen roller 12 in the direction of arrow 14, document 16 or like, which is to be read out, is transported in the direction of arrow 18. Housing 24 is of sensor head 50. Housing 24 has bottom plate 20, which has elongated opening 22 extending in the longitudinal direction of housing 24. Image transfer optical unit 26 is mounted in housing 24 such that it faces document 16 through opening 22. Image transfer optical unit 26 will be described later in detail. Light source unit 28 is provided on the inner surface of top of housing 24 such that it faces the top of image transfer optical unit 26. Photoelectric converting unit 30, e.g., CCD sensor array, is mounted on top of image transfer optical unit 26. Unit 30 detects light rays reflected by document 16 and transmitted through image transfer optical unit 26 and converts the light rays into an electric signal. Circuit board 34 is accommodated in housing 24. Driver circuit 32 for driving CCD sensor array 30 is mounted on circuit board 34. Driver circuit 32 is electrically connected to CCD sensor array 30 through conductive rubber 36. Input/output leads 37 connected to driver circuit 32 are led to the outside of housing 24 through a connector section of driver circuit 32.

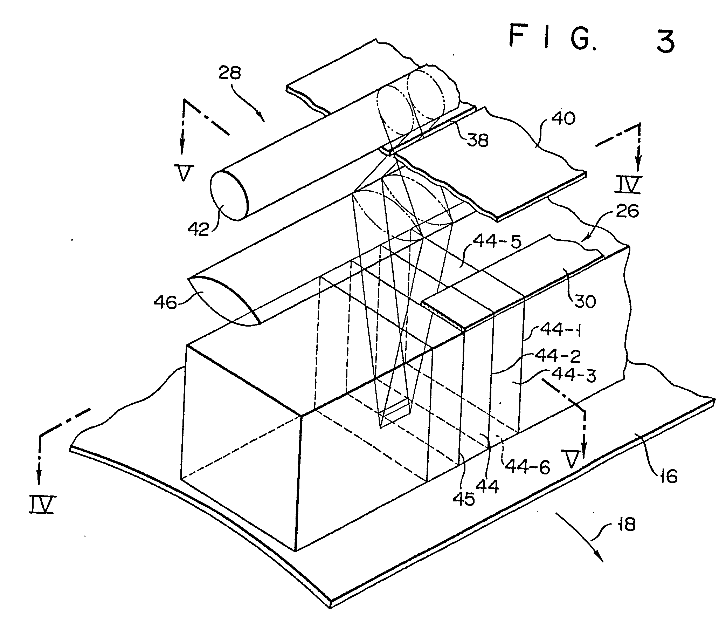

As shown in Fig. 3, light source unit 28 and image transfer optical unit 26 are arranged in an aligned relation to each other above an area of document 16 which is to be read out. Light source unit 28 includes light shielding plate 40 which has slit 38 extending substantially parallel to elongated opening 22 of housing 24 as shown in Fig. 2. Fluorescent lamp 42 or like light source is disposed above plate 40. Cylindrical lens 46 is disposed between plate 40 and image transfer optical unit 26. Fluorescent lamp 42, slit 38 and cylindrical lens 46 are arranged in an aligned relation to one another such that the axis of fluorescent lamp 42, slit 38 and axis of cylindrical lens are parallel to one another.

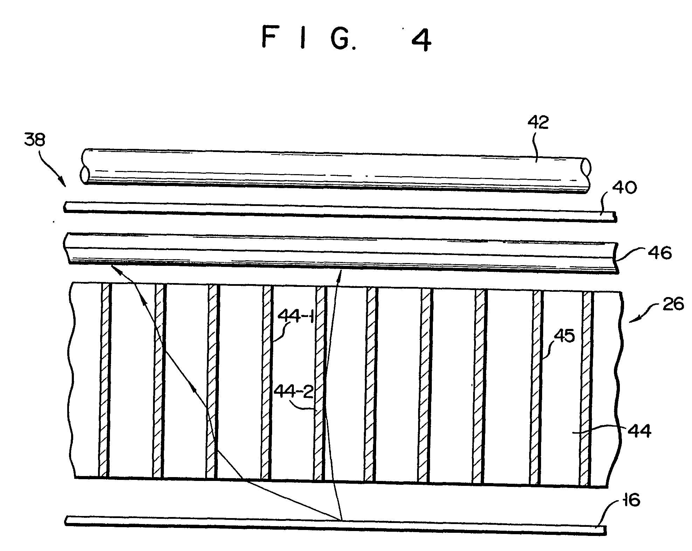

Image transfer optical unit 26, as shown in Fig. 4, has a structure having a number of optical transparent plate segments 44. Plate segments 44 are arranged face to face in a row, and adjacent ones of them are bonded together by intervening adhesive layer 45. Plate segments 44 are provided in number corresponding to sensing elements of CCD sensor array 30 or an integral multiple of the number of sensing elements. Each plate segment corresponds to each pixel of an image to be read out. The number of the optical transparent plate segment 44 may be same as that of the sensing elements or may be different that of the sensing elements. As shown in Figs. 4 to 6, each plate segment 44 has first of pair side surfaces 44-1 and 44-2, and second pair of side surfaces 44-3 and 44-4, each pair of which are parallel to each other. First and second surfaces 44-1 and 44-2 of adjacent plate segments are bonded together by adhesive layer 45, which has a thickness substantially equal to one half of wavelength of light rays from light source 42. The length of optical unit 26, which is a lamination of the plate segments, is equal to or covers the maximum width of document to be read out. Each plate segment 44 is made of glass or a transparent organic material with refractive index n of 1.42 or above. As an example, when the image sensor apparatus is designed to provide a resolution of 8 lines per mm, the plate segments have a thickness of substantially 0.125 mm. Adhesive layer 45 is not a prerequisite element of the invention, and it may be replaced with an air gap or a light shield plate. In this case, optical unit 26 is secured to a frame structure to maintain the shape of its entirety. Preferably, adhesive layer 45 is made of a material which can absorb light rays.

In the image sensor apparatus shown in Figs. 2 to 6, light rays emitted from light source 42 is led through slit 38 of plate 40 to be incident on cylindrical lens 46. Cylindrical lens 46 converges the incident light rays. The converged light rays from cylindrical lens 46 are incident on the top surface of image transfer optical unit 26, i.e., top surface 44-5 of each optical transparent reflector plate segment 44. The light rays transmitted through optical transparent plate segment 44 leaves the same from bottom surface 44-6 thereof to be led through the gap between document 16 and optical unit 26 and arrive document 16. Since cylindrical lens converges light rays from the light source, a linear light spot is formed on document 16 by the converged light rays. Since document 16 is transported by platen roller 12, it is scanned by the linear light spot, respectively.

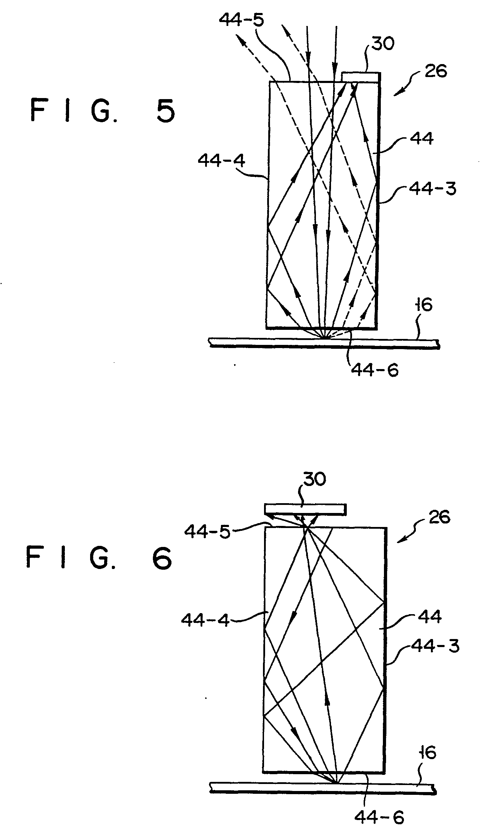

The patterns or characters drawn on document 16 provide various image densities. Therefore, the reflectivity of document 16 scanned by the linear light spot is varied for each segment area corresponding to bottom surface 44-6 of each plate segment 44. In other words, light rays reflected by each segment area has intensity corresponding to the reflectivity, i.e., image density, of that segment area. As shown in Fig. 5, light rays are randomly reflected by the segment area to be led again into each plate segment 44. As shown in solid lines of Fig. 5, of the randomly reflected light rays, particular light rays are totally reflected by side surface 44-4, which constitutes an interface with air, to be led toward and detected by a sensor element of CCD sensor array 30 provided on top surface 44-5 of plate segment 44. As shown in dashed lines of Fig. 5, there are light rays which are reflected by side surfaces 43-3 and 44-4 to be transmitted through top surface 44-5 to the outside of plate segment 44. Further particular light rays among the randomly reflected light rays are directed toward and reflected by side surfaces 44-1 and 44-2 defining interfaces with adhesive layers 45, as shown in Fig. 4, so that they are similarly detected by sensor array 30. Further light rays among the randomly reflected light rays are led as spurious light rays into a plate segment 44 which does not corresponds to the pertinent segment area, as shown in Fig. 4. These light rays are reduced in the intensity level as they proceed through adhesive layer 45. Therefore, even if they are incident on sensor array 30, they are detected merely as slight noise by the sensor array.

In sensor array 30, light rays corresponding to the image density on the individual segment areas of document 16 are incident on the individual sensor elements of sensor array 30. The individual sensor elements of array 30 thus generate pixel signals corresponding to the image density of the individual segment areas. These pixel signals are provided as image signal from CCD sensor array 30.

In the image sensor apparatus as described above, the resolution for main scanning direction is determined by the thickness of plate segment 44 and the gaps between the segments and the resolution for subscanning direction is determined by the width of illuminated light on the document. According to the invention, particular light rays are directed toward CCD sensor array 30 by making use of the total reflection by side surfaces 44-1 to 44-4 of plate segment 44. Whether the total reflection occurs or not depends on the angle of incidence and wavelength of incident light rays. The wavelength of illumination light rays can be selected by using white light as illumination light and varying the angle of incidence. Thus, it is readily possible to obtain selective reading of a desired color of image information of an original or the like.

As shown in Fig. 6, light rays may be obliquely incident on the top surface 44-5 at an inclined angle, wherein the cylindrical lens 46, the slit 38 and the light source 42 are arranged in a travelling path of the incident light rays, that is, the optical axis of these optical elements is inclined to an axis normal to the top surface 44-5. In the optical plate segment 26, the light rays reflected from the document 16 are totally reflected by the side surfaces 44-3, 44-4 and the light rays reflected from the side surfaces 44-3, 44-4 and the document 16 are introduced into the CCD sensor array 30 through a gap between the top surface 44-5 and the CCD sensor array 30.

As has been shown, according to the invention the CCD sensor array is provided directly on a surface of the image transfer optical unit, so that it is possible to reduce the size of the image reading apparatus.

It is possible to prevent friction of the optical unit due to friction with the original surface or the like by forming a wear-resistant film on the corresponding surface of the unit.

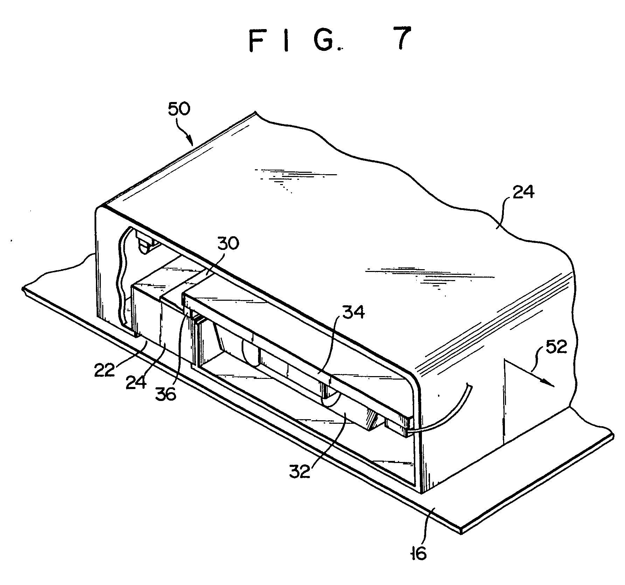

In the above embodiment each transparent plate segment of the image transfer optical unit is shown to be rectangular in shape. However, this shape is by no means limitative, and the same effects may be obtained with a plate segment having a different shape, i.e., trapezoid or cubic with side surfaces 44-1 and 44-2 in a rhomb. Further, top and bottom surfaces 44-5 and 44-6 of the plate segment, which are respectively a light incidence surface and a light emergence surface, need not be parallel to each other. Furthermore the optical transparent plate segment may be formed into a hexagonal column having a hexagonal cross section, which have first, second, third, and fourth pairs of side surfaces, each pair of side surfaces being parallel to each other. Further, it is possible to hold document 16 stationary and move sensor head 50 in the direction of arrow 52, as shown in Fig. 7. Image sensing means may be an amorphous silicon linear sensor or CdS linear sensor instead of the CCD line sensor.

With the construction as described above, of the image reading apparatus according to the invention, it is possible to increase the factor of collection of light rays reflected from a subject being read out and to also reduce the size of the image reading apparatus.

## Claims

1. An image sensor apparatus for reading an image of an object (16) to be read out comprising:

means (38, 42, 46) for emitting light rays;

means (26) for transferring an image, which has a laminated structure in which a plurality of optical plate segments (44) are accumulated, each of said plate segments (44) including a light incident surface (44-5) and a light emergence surface (44-6), light rays from said light emitting means (38, 42, 46) being incident on the incident surface (44-5), passing through each of said plate segments (44) and being emerged from the emergence surface (44-6) which faces to the object (16) to be read out, and the light rays reflected from said object (16) being introduced into each of said plate segments (44) through the emergence surface (44-6), adjacent ones of the optical plate segments (44) are coupled by an adhesive layer (45); and

means (30) for sensing an image, said sensing means including a plurality of photosensor elements to which the light rays introduced into the corresponding plurality of optical plate segments (44) are directed, the photosensor elements converting the directed light rays into photoelectric signals;

characterized in that

the said adhesive layer (45) is made of a material capable of attenuating the intensity level of light rays transmitted through it, and that

the light emergence surfaces (44-6) of the optical plate segments (44) are coated with a wear-resistant film.

2. An image sensor apparatus according to claim 1, characterized in that each of said plate segments (44) has a first side surface (44-4), part of the light rays reflected from said object (16) being totally reflected from the first side surface (44-4) and the totally reflected light rays and the light rays reflected from said object (16) being directed to said corresponding photosensor element.

3. An image sensor apparatus according to claim 1, characterized in that said each of said plate segments (44) corresponds to each of said photosensor elements.

4. An image sensor apparatus according to claim 1, characterized in that the number of said plate segments (44) is different from that of said photosensor elements.

5. An image sensor apparatus according to claim 1, characterized in that said image sensing means (30) is an amorphous silicon line sensor.

6. An image sensor apparatus according to claim 1, characterized in that said image sensing means (30) is a CdS line sensor.

7. An image sensor apparatus according to claim 1, characterized in that said image sensing means (30) is a CCD line sensor.

8. An image sensor apparatus according to claim 1, characterized in that said image sensing means (30) is provided on light incidence surfaces (44-5) of said plate segments (44).

9. An image sensor apparatus according to claim 1, characterized in that said means (38, 42, 46) for emitting light rays includes a light source (42) for emitting light rays and a cylindrical lens (46) disposed between said light source (42) and said image transferring means (44) for converging incident light rays to form a linear light spot on said object to be read out.

10. An image sensor apparatus according to claim 9, characterized in that said means (38, 42, 46) for emitting light rays further includes a slit (38) disposed between said light source (42) and said cylindrical lens (46).

11. An image sensor apparatus according to claim 1, characterized by further comprising means for transporting (12) said object (16) to be read out.

12. An image sensor apparatus according to claim 2, characterized in that said plate segments (44) each further has a second side surface (44-3) substantially parallel to said first side surface and third and fourth side surfaces (44-1, 44-2) not parallel to said first side surface but parallel to each other.

**Patentansprüche**

1. Bilddetektionsapparat zum Auslesen oder Abtasten eines Bilds von einem abzutastenden Objekt (16), umfassend:

eine Einrichtung (38, 42, 46) zum Emittieren von Lichtstrahlen,

eine zum Übertragen eines Bilds dienende Einheit (26) mit einem schichtartigen oder laminierten Aufbau, bei dem eine Anzahl von optischen Plattensegmenten (44) zusammengefaßt sind, jedes Plattensegment (44) eine Lichteinfallsfläche (44-5) und eine Lichtaustrittsfläche (44-6) aufweist, Lichtstrahlen von der Lichtemittiereinrichtung (38, 42, 46) auf die Einfallsfläche (44-5) auftreffen, durch jedes der Plattensegmente (44) hindurchgehen und an der dem abzutastenden Objekt (16) zugewandten Austrittsfläche (44-6) austreten, und die vom Objekt (16) reflektierten Lichtstrahlen über die Austrittsfläche (44-6) in jedes der Plattensegmente (44) eingeführt werden, wobei benachbarte der optischen Plattensegmente (44) mittels einer Klebmittelschicht (45) gekoppelt sind, und

eine zum Abgreifen eines Bilds dienende Einheit (30) mit einer Anzahl von Photosensorelementen, zu denen die in die betreffende Anzahl von optischen Plattensegmenten (44) eingeführten Lichtstrahlen gerichtet werden, wobei die Photosensorelemente die auf sie gerichteten Lichtstrahlen in photoelektrische Signale umwandeln,

dadurch gekennzeichnet, daß

die Klebmittelschicht (45) aus einem Material besteht, das den Intensitätspegel der von ihr durchgelassenen Lichtstrahlen zu dämpfen vermag, und daß

die Lichtaustrittsflächen (44-6) der optischen Plattensegmente (44) mit einem verschleißfesten Film beschichtet sind.

2. Bilddetektionsapparat nach Anspruch 1, dadurch gekennzeichnet, daß jedes der Plattensegmente (44) eine erste Seitenfläche (44-4) aufweist, wobei ein Teil der vom Objekt (16) reflektierten Lichtstrahlen von der ersten Seitenfläche (44-4) totalreflektiert wird und die totalreflektierten Lichtstrahlen sowie die vom Objekt (16) reflektierten Lichtstrahlen zum betreffenden Photosensorelement gerichtet werden.

3. Bilddetektionsapparat nach Anspruch 1, dadurch gekennzeichnet, daß jedes der Plattensegmente (44) (jeweils) jedem der Photosensorelemente entspricht bzw. mit diesem korrespondiert.

4. Bilddetektionsapparat nach Anspruch 1, dadurch gekennzeichnet, daß die Zahl der Plattensegmente (44) von derjenigen der Photosensorelemente verschieden ist.

5. Bilddetektionsapparat nach Anspruch 1, dadurch gekennzeichnet, daß die Bildabgreifeinheit (30) ein Zeilensensor aus amorphem Silizium ist.

6. Bilddetektionsapparat nach Anspruch 1, dadurch gekennzeichnet, daß die Bildabgreifeinheit (30) ein CdS-Zeilensensor ist.

7. Bilddetektionsapparat nach Anspruch 1, dadurch gekennzeichnet, daß die Bildabgreifeinheit (30) ein CCD-Zeilensensor ist.

8. Bilddetektionsapparat nach Anspruch 1, dadurch gekennzeichnet, daß die Bildabgreifeinheit (30) auf Lichteinfallsflächen (44-5) der Plattensegmente (44) vorgesehen ist.

9. Bilddetektionsapparat nach Anspruch 1, dadurch gekennzeichnet, daß die Einrichtung (38, 42, 46) zum Emittieren von Lichtstrahlen eine Lichtquelle (42) zum Emittieren von Lichtstrahlen und eine zwischen der Lichtquelle (42) und der Bildübertragungseinheit (44 bzw. 26) angeordnete Zylinderlinse (46) zum Konvergieren der einfallenden Lichtstrahlen zwecks Bildung eines linearen Lichtflecks auf dem abzutastenden Objekt umfaßt.

10. Bilddetektionsapparat nach Anspruch 9, dadurch gekennzeichnet, daß die Einrichtung (38, 42, 46) zum Emittieren von Lichtstrahlen ferner einen zwischen der Lichtquelle (42) und der Zylinderlinse (46) angeordneten Schlitz (38) aufweist.

11. Bilddetektionsapparat nach Anspruch 1, dadurch gekennzeichnet, daß ferner eine Einrichtung zum Transportieren (12) des abzutastenden Objekts (16) vorgesehen ist.

12. Bilddetektionsapparat nach Anspruch 2, dadurch gekennzeichnet, daß die Plattensegmente (44) jeweils ferner eine zweite, im wesentlichen parallel zur ersten Seitenfläche liegende Seitenfläche (44-3) sowie dritte und vierte Seitenflächen (44-1, 44-2), die nicht parallel zur ersten Seitenfläche, aber parallel zueinander liegen, aufweist.

**Revendications**

1. Un appareil capteur d'image permettant de lire l'image d'un objet (16) à lire, comprenant:

un moyen (38, 42, 46) servant à émettre des rayons lumineux;

un moyen (26) servant à transférer une image, lequel moyen possède une structure stratifiée dans laquelle plusieurs segments de lame optique (44) sont accumulés, chacun desdits segments de lame (44) comportant une surface d'incidence de lumière (44-5) et une surface d'émergence de lumière (44-6), les rayons lumineux venant dudit moyen d'émission de lumière (38, 42, 46) tombant sur la surface d'incidence (44-5), traversant chacun des segments de lame (44) et émergeant de la surface d'émergence (44-6) qui fait face à l'objet (16) à lire, et les rayons lumineux réfléchis par ledit objet (16) s'introduisant dans chacun desdits segments de lame (44) via la surface d'émergence (44-6), les segments de lame optique (44) qui sont adjacents entre eux étant couplés par une couche d'adhésif (45); et

un moyen (30) servant à détecter une image, ledit moyen de détection comportant plusieurs éléments photocapteurs sur lesquels les rayons lumineux introduits dans la pluralité correspondante de segments de lame optique (44) sont dirigés, les éléments photocapteurs convertissant en signaux électriques les rayons lumineux ainsi dirigés;

caractérisé en ce que:

ladite couche d'adhésif (45) est faite d'un matériau qui peut atténuer le niveau d'intensité des rayons lumineux la traversant, et

les surfaces d'émergence de lumière (44-6) des segments de lame optique (44) sont revêtues d'une pellicule résistant à l'usure.

2. Appareil capteur d'image selon la revendication 1, caractérisé en ce que chacun desdits segments de lame (44) possède une première surface latérale (44-4), une partie des rayons lumineux réfléchis par ledit objet (16) étant réfléchis totalement par la première surface latérale (44-4), et les rayons lumineux totalement réfléchis de même que les rayons lumineux réfléchis par ledit objet (16) étant dirigés sur ledit élément photocapteur correspondant.

3. Appareil capteur d'image selon la revendication 1, caractérisé en ce que chacun desdits segments de lame (44) correspond à l'un, particulier, desdits éléments photocapteurs.

4. Appareil capteur d'image selon la revendication 1, caractérisé en ce que le nombre desdits segments de lame (44) diffère de celui desdits éléments photocapteurs.

5. Appareil capteur d'image selon la revendication 1, caractérisé en ce que ledit moyen de détection d'image (30) est un capteur linéaire au silicium amorphe.

6. Appareil capteur d'image selon la revendication 1, caractérisé en ce que ledit moyen de détection d'image (30) est un capteur linéaire au CdS.

7 Appareil capteur d'image selon la revendication 1 caractérisé en ce que ledit moyen de détection d'image (30) est un capteur linéaire de type CCD (dispositif à couplage de charge).

8. Appareil capteur d'image selon la revendication 1, caractérisé en ce que ledit moyen de détection d'image (30) est disposé sur les surfaces d'incidence de lumière (44-5) desdits segments de lame (44).

9. Appareil capteur d'image selon la revendication 1, caractérisé en ce que ledit moyen (38, 42, 46) servant à émettre des rayons lumineux comporte une source de lumière (42) servant à émettre des rayons lumineux et une lentille cylindrique (46) disposée entre ladite source de lumière (42) et ledit moyen (44) de transfert d'image afin de faire converger les rayons lumineux incidents pour former une tache lumineuse linéaire sur ledit objet à lire.

10. Appareil capteur d'image selon la revendication 9, caractérisé en ce que ledit moyen (38, 42, 46) servant à émettre des rayons lumineux comporte en outre une fente (38) disposée entre ladite source lumineuse (42) et ladite lentille cylindrique (46).

11. Appareil capteur d'image selon la revendication 1, caractérisé en ce qu'il comprend en outre un moyen servant à transporter (12) ledit objet (16) à lire.

12. Appareil capteur d'image selon la revendication 2, caractérisé en ce que lesdits segments de lame (44) possèdent en outre chacun une deuxième surface latérale (44-3) sensiblement parallèle à ladite première surface latérale et des troisième et quatrième surfaces latérales (44-1, 44-2) qui ne sont pas parallèles à ladite première surface latérale, mais sont parallèles entre elles.

# F I G. 1

FIG. 2

EP 0 196 006 B1

24 50 28 30 36 34 37 26 22 32 20 14 18 12 16

FIG. 3

# FIG. 4

EP 0 196 006 B1

F I G. 5

F I G. 6

FIG. 7